# EUROPEAN PATENT APPLICATION

(11) **EP 4 697 461 A1**
(43) Date of publication of application: **18.02.2026**
(21) Application number: 25184231.6
(22) Date of filing: 20.06.2025
(51) Int. Cl.: H01M 50/107, H01M 50/528

(54) **SECONDARY BATTERY, BATTERY PACK AND ELECTRONIC DEVICE**

(30) Priority: 15.08.2024 CN 202421980920 U
(71) Applicant: AESC Japan Ltd., Yokohama-Shi, Kanagawa 220-0012 (JP)
(72) Inventor: QIAN, Jia, Jiangyin City, Wuxi City, 214443 (CN)
(74) Representative: Becker, Eberhard

(57) **Abstract**

A secondary battery (100), a battery pack and an electronic device (1) are provided. The secondary battery (100) includes a housing (110), a terminal assembly (120), a cover plate (130), and a current-collecting member (150). The housing (110) includes a surrounding side wall (112) with one end being formed with an opening (113) having a rolling groove (114) recessed toward an inner portion of the housing (110). The electrode assembly (120) accommodated in the housing (110) includes a tab (125) facing the opening (113). The cover plate (130) seals on the opening (113). The current-collecting member (150) includes a current collector (151) fixedly connected to the tab (125), a housing-connecting portion (152) arranged at an outer periphery of the current collector (151), and a buffering portion (153) connecting the housing-connecting portion (152) and the current collector (151) for absorbing bending stress when the housing-connecting portion (152) is bent.

## Description

### BACKGROUND

### Technical Field

The disclosure relates to the technical field of batteries, and in particular, relates to a secondary battery and an electronic device.

### Description of Related Art

At present, mechanical sealing is the mainstream packaging method for cylindrical batteries of the related art. Mechanical sealing is widely used due to its advantages such as mature processes and equipment and fast production. In the cylindrical batteries of the related art, a current-collecting member is arranged at a position near the opening of the housing most of the time, so that one end of the current-collecting member is welded and connected to the side wall of the housing, and the other end is electrically connected to the tab of the terminal assembly. The electrical connection between the housing and the electrode assembly is thus implemented in this way. Mechanical sealing is then performed, including rolling a rolling groove that is indented toward the inner portion of the housing on the side wall of the housing and then pressing the cover plate by upsetting. During this process, the bending stress generated by the current-collecting member may cause the inner portion of the current-collecting member to warp. As a result, the welding between the current-collecting member and the tab is broken, so the risk of electrical connection failure of the electrode assembly arises.

### SUMMARY

In view of the abovementioned shortcomings of the related art, the disclosure provides a secondary battery and an electronic device capable of improving the technical problem of easy welding failure between a current-collecting member and a tab during a mechanical sealing process of a cylindrical battery.

To achieve the above and other related purposes, the disclosure provides a secondary battery including a housing, a terminal assembly, a cover plate, and a current-collecting member. The housing includes a surrounding side wall. One end of the side wall is formed with an opening, and one end of the side wall close to the opening includes a rolling groove recessed toward an inner portion of the housing. The electrode assembly is accommodated in the housing and includes a tab facing the opening. The cover plate seals and is mounted on the opening. The current-collecting member includes a current collector and a housing-connecting portion arranged at an outer periphery of the current collector. The current collector is fixedly connected to the tab. The housing-connecting portion is bent toward an axis of the housing and is welded to a surface of the rolling groove facing the terminal assembly. The current-collecting member further includes a buffering portion connecting the housing-connecting portion and the current collector, and the buffering portion is configured to absorb bending stress when the housing-connecting portion is bent.

In the above technical solution, the buffering portion is arranged between the housing-connecting portion and the current collector. The buffering portion absorbs the bending stress generated when the housing-connecting portion is bent. In this way, the transferring of the bending stress from the housing-connecting portion to the fixed connection between the current collector and the tab is weakened, so the problem of welding failure between the current-collecting member and the tab caused by the bending stress is improved.

In the secondary battery provided by an embodiment of the disclosure, the buffering portion includes an arch-shaped protrusion protruding from the current collector and extending in a circumferential direction of the outer periphery of the current collector. The buffering portion is formed with an indentation on the opposite side of the arch-shaped protrusion.

In the above technical solution, when the housing-connecting portion is bent and the bending stress is generated and transferred to the current collector, the buffering portion protruding from the current collector is deformed to be straightened under the action of the bending stress. Part of the bending stress is thus absorbed, and the transferring of the bending stress from the housing-connecting portion to the fixed connection between the current collector and the tab is weakened, so the problem of welding failure between the current-collecting member and the tab caused by the bending stress is improved.

In the secondary battery provided by an embodiment of the disclosure, a thickness of the current collector is a, and a height of the buffering portion protruding from the current collector is b, where 0.5a≤b≤3a.

In the above technical solution, the height of the buffering portion protruding from the current collector is set to be greater than or equal to 0.5a to ensure that the buffering portion has a space for deformation, and is set to be less than or equal to 3a to avoid the buffering portion interfering with the bending of the housing-connecting portion due to excessive height. Material saving is also achieved in this way.

In the secondary battery provided by an embodiment of the disclosure, in a radial direction of the current-collecting member, a distance from an inner side of the arch-shaped protrusion to an outer periphery of the current-collecting member is c, where b≤c≤4mm.

In the above technical solution, setting b to be less than or equal to c can ensure that there is a sufficient space between the housing-connecting portion and the current collector to accommodate the buffering portion. With this arrangement of setting the distance c from the inner side of the arch-shaped protrusion to the outer periphery of the current-collecting member to be less than or equal to 4mm, the distance between the buffering portion and the housing-connecting portion is closer, so that the bending stress is absorbed, and the transferring of the bending stress from the housing-connecting portion to the fixed connection between the current collector and the tab is weakened.

In the secondary battery provided by an embodiment of the disclosure, the buffering portion is provided with a first weakened portion thereon extending in a circumferential direction of the current-collecting member, and the first weakened portion is configured to weaken the strength of the buffering portion.

In the above technical solution, the arrangement of the first weakened portion weakens the strength of the buffering portion, so the buffering portion can be easily deformed, and the transferring of the bending stress from the housing-connecting portion to the fixed connection between the current collector and the tab is weakened.

In the secondary battery provided by an embodiment of the disclosure, the current-collecting member includes a plurality of housing-connecting portions and a plurality of buffering portions connected to the housing-connecting portions one-to-one. The buffering portions surround and are connected to the outer periphery of the current collector. Each housing-connecting portion includes a bending portion connected to the buffering portion, and notches are arranged on both sides of the bending portion and/or the buffering portion in a circumferential direction of the housing.

In the above technical solution, the plurality of housing-connecting portions surround and are connected to the outer periphery of the current collector. On the one hand, structural strength is improved, a contact area is increased, heat dissipation performance is enhanced, resistance effect is lowered, less materials are used, and stress concentration is decreased. Each housing-connecting portion is connected one-to-one to one buffering portion, and each buffering portion provides the effect of absorbing the bending stress for the corresponding housing-connecting portion. In this way, the uniformity and balance of the force applied on the current-collecting member is improved, and the current guiding stability of the current-collecting member is enhanced. With the arrangement of the notches, the width of bending portion and/or buffering portion is decreased, so that the strength of the bending portion and/or the buffering portion is reduced, deformation is easily achieved, and the bending stress is thus absorbed. In addition, the notches of the bending portion reduce the bending stress generated when the housing-connecting portion is bent. The combination of the above effects weakens the transferring of the bending stress towards the welding and connecting position between the current-collecting member and the tab, and the problem of welding failure between the current-collecting member and the tab caused by the bending stress is thus improved.

In the secondary battery provided by an embodiment of the disclosure, a sum of minimum current flow areas of all the bending portions is s1, a sum of minimum current flow areas of all the buffering portions is s2, and a total area of a welding wire formed by welding the current collector and the tab is s, where s1>s and s2>s.

In the above technical solution, the minimum current flow area of the bending portion is the minimum cross-sectional area of each bending portion. The minimum current flow area of the buffering portion is the minimum cross-sectional area of each buffering portion in the circumferential direction of the current-collecting member. The total area of the welding wire refers to the area of the projection of all the welding wires formed by welding the tab-connecting portion and the tab in the axial direction of the terminal assembly. The arrangement where the sum s1 of the minimum current flow areas of all the bending portions and the sum s2 of the minimum current flow areas of all the buffering portions are both greater than the total area s of the welding wire weakens the transferring of the bending stress without affecting the current flowing effect of the bending portion and the buffering portion.

In the secondary battery provided by an embodiment of the disclosure, the housing-connecting portion includes a bending portion connected to the buffering portion. The bending portion is provided with a second weakened portion thereon extending in the circumferential direction of the current-collecting member. The second weakened portion is configured to weaken the strength of the bending portion.

In the above technical solution, arrangement of the second weakened portion on the bending portion weakens the stress generated when the housing-connecting portion is bent. Further, due to the reduced strength of the second weakened portion, under the action of stress, the second weakened portion of the bending portion is deformed first, so that the transferring of the stress towards the welding and connecting position between the current-collecting member and the tab is reduced, and the problem of welding failure between the current-collecting member and the tab caused by the bending stress is thus improved. Meanwhile, the second weakened portion also guides and positions the bending of the bending portion, so that the precision of the bending position of the bending portion is improved, and the consistency of the assembly quality of the battery is thereby enhanced. In addition, when welding the housing-connecting portion and the housing before the rolling groove, the second weakened portion also serves as a reference line for the welding position, so as to facilitate the positioning of the welding head during welding.

In the secondary battery provided by an embodiment of the disclosure, a sum of minimum current flow areas of all the second weakened portions is s3, and a total area of a welding wire formed by welding the current collector 151 and the tab is s, where s3>s.

In the above technical solution, the minimum current flow area of the second weakened portion is the minimum cross-sectional area of each second weakened portion in the circumferential direction of the current-collecting member. The arrangement where the sum s3 of the minimum current flow areas of all the second weakened portions is greater than the total area s of the welding wire weakens the transferring of the bending stress without affecting the current flowing effect of the second weakened portions.

The disclosure further provides a battery pack including the secondary battery according to any one of the above.

The disclosure further provides an electronic device including a battery group, and the battery group includes the secondary battery according to any one of the above.

### BRIEF DESCRIPTION OF THE DRAWINGS

To make the technical solutions provided in the embodiments of the disclosure or the related art more clearly illustrated, several accompanying drawings required by the embodiments or the related art for description are briefly introduced as follows. Obviously, the drawings in the following description are merely some embodiments of the disclosure, and for a person having ordinary skill in the art, other embodiments can be obtained based on these drawings without inventive effort.
FIG. 1 is a schematic view of an overall structure of a secondary battery according to an embodiment of the disclosure.
FIG. 2 is a schematic view of a structure of an electrode assembly of the secondary battery according to an embodiment of the disclosure.
FIG. 3 is a schematic view of a structure of a current-collecting member before being bent according to a first embodiment of the disclosure.
FIG. 4 is a local enlargement view of a region A in FIG. 3.
FIG. 5 is a front view of the current-collecting member in FIG. 3.
FIG. 6 is a local enlargement view of a region B in FIG. 5.
FIG. 7 is a schematic view of the structure of the current-collecting member before being bent according to a second embodiment of the disclosure.
FIG. 8 is a local enlargement view of a region C in FIG. 7.
FIG. 9 is a schematic view of the structure of the current-collecting member before being bent according to a third embodiment of the disclosure.
FIG. 10 is a local enlargement view of a region D in FIG. 9.
FIG. 11 is a schematic view of the structure of the current-collecting member before being bent according to a fourth embodiment of the disclosure.
FIG. 12 is a local enlargement view of a region E in FIG. 11.
FIG. 13 is a front view of the current-collecting member in FIG. 11.
FIG. 14 is a local enlargement view of a region F in FIG. 13.
FIG. 15 is a schematic view of the structure of the current-collecting member before being bent according to a fifth embodiment of the disclosure.
FIG. 16 is a local enlargement view of a region G in FIG. 15.
FIG. 17 is a schematic view of the structure of the current-collecting member before being bent according to a sixth embodiment of the disclosure.
FIG. 18 is a local enlargement view of a region H in FIG. 17.
FIG. 19 is a schematic view of a battery group in an electronic device according to an embodiment of the disclosure.
FIG. 20 is a schematic view of the electronic device according to an embodiment of the disclosure.

Description of reference numerals of the elements:
1: electronic device, 10: battery group, 11: working portion, 101: box, 102: box cover, 100: secondary battery, 110: housing, 111: end wall, 112: side wall, 113: opening, 114: rolling groove, 1141: first side wall, 1142: second side wall, 120: terminal assembly, 121: positive terminal sheet, 1211: positive current collector, 1212: first coated region, 1213: first uncoated region, 122: separator, 123: negative terminal sheet, 1231: negative current collector, 1232: second coated region, 1233: second uncoated region, 124: negative tab, 125: positive tab, 130: cover plate, 140: terminal post, 150: current-collecting member, 151: current collector, 152: housing-connecting portion, 1521: bending portion, 1522: notch, 1523: second weakened portion, 153: buffering portion, 1531: first weakened portion, 154: tab-connecting portion.

### DESCRIPTION OF THE EMBODIMENTS

The implementation of the disclosure is illustrated below by specific embodiments. A person having ordinary skill in the art can easily understand other advantages and effects of the disclosure from the content disclosed in this specification. The disclosure can also be implemented or applied through other different specific implementation ways. The details in this specification can also be modified or changed based on different viewpoints and applications without departing from the spirit of the disclosure. Note that the following embodiments and the features in the embodiments may be combined with each other in the case of no conflict. It should also be understood that the terminology used in the embodiments of the disclosure is for describing a specific implementation, but not for limiting the protection scope of the disclosure. The test methods for which specific conditions are not indicated in the following embodiments are usually in accordance with conventional conditions or in accordance with the conditions suggested by each manufacturer.

When the numerical ranges are given in the embodiments, it should be understood that, unless otherwise stated in the disclosure, the two endpoints of each numerical range and any numerical value between the two endpoints may be selected. Unless otherwise defined, all technical and scientific terms used in the disclosure are consistent with the grasp of the prior art by a person having ordinary skill in the art and the content of the disclosure. Any method, apparatus, and material in the prior art similar or equivalent to the methods, apparatuses, and materials described in the embodiments of the disclosure may also be used to implement the disclosure.

It should be noted that terms such as "upper", "lower", "left", "right", "middle" and "one" quoted in this specification are only for the convenience of description and are not used to limit the applicable scope of the disclosure. The change or adjustment of its relative relationship should also be regarded as the applicable scope of the disclosure without substantive change of the technical content.

A secondary battery includes a terminal assembly. The electrode assembly is the component in the secondary battery where electrochemical reactions occur, and one or more terminal assemblies may be included.

The secondary battery also includes a housing, a cover plate, and a terminal post. The housing includes an end wall and a side wall surrounding the end wall, and one end of the side wall has an opening. The electrode assembly may be assembled into the housing via the opening of the housing. The cover plate is used to cover the opening of the housing for sealing. The terminal post passes through the end wall and is electrically connected to the electrode assembly to conduct the electrical energy generated by the electrode assembly out of the battery.

At present, the mainstream packaging method for secondary batteries of the related art is mechanical sealing. Mechanical sealing is widely used due to its advantages such as mature processes and equipment and fast production. The current-collecting member is electrically connected to both the electrode assembly and the housing, so as to achieve electrical connection between the electrode assembly and the housing. Specifically, a rolling groove that is indented toward the inner portion of the housing is first rolled on the side wall of the housing, and the side of the rolling groove that is close to the electrode assembly presses against the edge of the current-collecting member. The rolling groove may limit the displacement of the electrode assembly in the axial direction. The cover plate is mounted on the step formed on the side of the rolling groove away from the terminal assembly. A sealing member is arranged between the cover plate and the housing. An upsetting method is then used at the edge of the opening to press the cover plate against the sealing member, so a reliable connection is formed, and the sealing of the housing is achieved.

There are multiple methods for connecting the current-collecting member to the housing. A commonly used one is that, a housing-connecting portion is arranged at the edge of the current-collecting member. First, the housing-connecting portion is welded and fixed to the side wall of the housing, and a rolling groove is then rolled on the side wall, causing the housing-connecting portion to be further bent toward the axis of the housing. However, the inventor has found that when the housing-connecting portion is bent toward the axis of the housing, bending stress may be generated. The bending stress may further be transferred to the inner portion of the current-collecting member, causing the inner portion of the current-collecting member to warp. As a result, the welding between the current-collecting member and the tab is broken, so the risk of electrical connection failure of the electrode assembly arises.

In view of the above, the disclosure provides a technical solution in which a buffering portion is arranged between the housing-connecting portion and the current collector. The buffering portion may absorb the bending stress generated when the housing-connecting portion is bent. In this way, the transferring of the bending stress from the housing-connecting portion to the fixed connection between the current collector and the tab is weakened, so the problem of welding failure between the current-collecting member and the tab caused by the bending stress is improved.

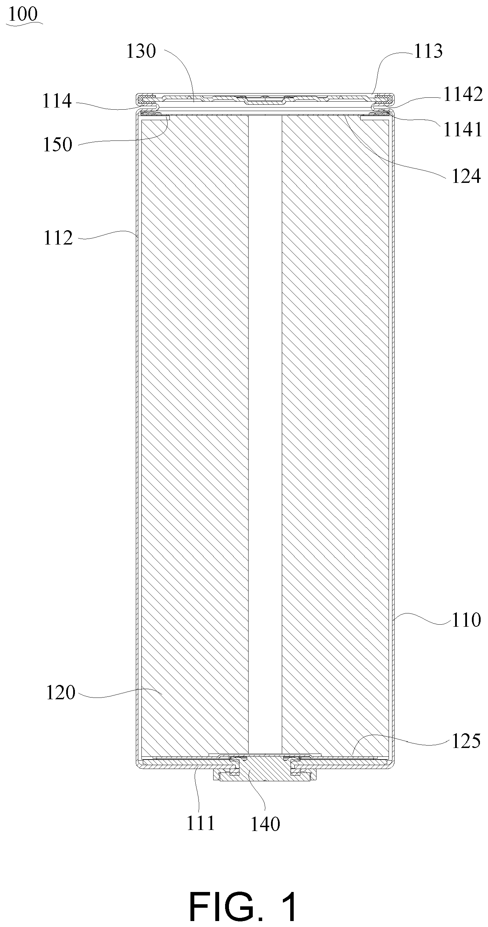

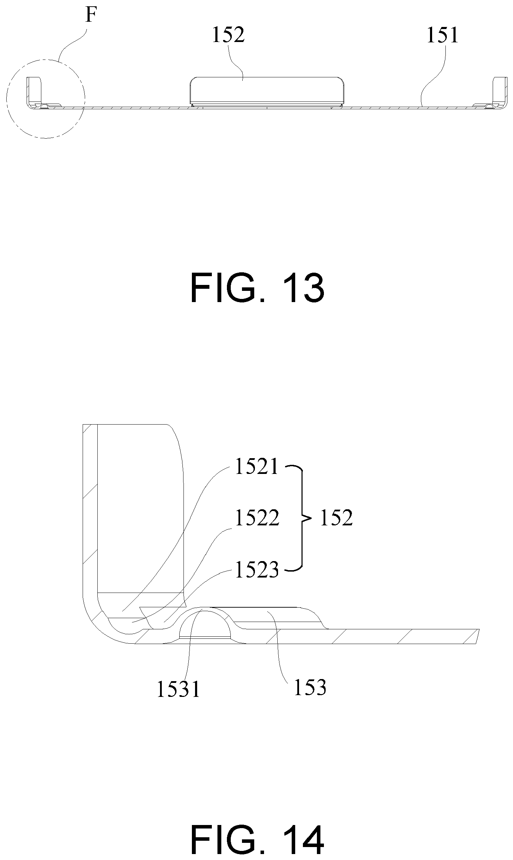

Referring to FIG. 1 to FIG. 20, the disclosure provides a secondary battery 100 including a housing 110, an electrode assembly 120, a terminal post 140, a cover plate 130, and a current-collecting member 150.

Referring to FIG. 1, the housing 110 includes an end wall 111 and a side wall 112 surrounding the end wall 111. As long as a stable sealing and electrical connection relationship can be formed, the connection between the end wall 111 and the side wall 112 may be achieved in a variety of ways, such as integral stamping, integral casting, or separate welding. The surrounding of the side wall 112 is not limited and may be in the form of a circular cylinder shape or a prismatic cylinder shape, or the side wall 112 may also surround the end wall 111 along any other closed loop contour that can be matched with the end wall 111. In the embodiment, an outer edge of the end wall 111 is circular, the side wall 112 surrounds the outer edge of the end wall 111 in a cylindrical shape, and a circular opening 113 is formed at an end of the side wall 112 away from the end wall 111. The housing 110 formed by the end wall 111 and the side wall 112 forms an accommodating cavity for accommodating the electrode assembly 120, electrolyte, and other necessary battery components. Specifically, a diameter of the housing 110 may be determined according to a specific size of the electrode assembly 120, such as 18mm, 21mm, 46mm, etc. The housing 110 can be made of various materials, such as copper, iron, aluminum, steel, aluminum alloy, etc. In order to prevent the housing 110 from rusting during long-term use, a surface of the housing 110 may also be plated with a layer of anti-rust material such as metal nickel.

With reference to FIG. 1 to FIG. 2, the electrode assembly 120 is received in an inner portion of the housing 110, and the electrode assembly 120 is a component in the secondary battery 100 where electrochemical reactions occur. One or a plurality of electrode assemblies 120 may be included within the housing 110. The electrode assembly 120 includes a terminal sheet and a separator 122, and the terminal sheet and the separator 122 are wound to form a wound structure. Specifically, in this embodiment, the electrode assembly 120 includes a positive terminal sheet 121, the separator 122, and a negative terminal sheet 123 wound around the housing 110 in an axial direction.

Referring to FIG. 1 to FIG. 2, the positive terminal sheet 121 includes a positive current collector 1211 and a positive active material layer coated on the positive current collector 1211. A first coated region 1212 coated with the positive active material layer and a first uncoated region 1213 without the positive active material layer are formed on the positive current collector 1211. The first coated region 1212 and the first uncoated region 1213 are arranged in the axial direction of the housing 110. The first uncoated region 1213 extends beyond the separator 122 towards one end in a height direction of the secondary battery 100 and is folded towards an axis of the housing 110 to form a stacked positive tab 125.

Referring to FIG. 1 to FIG. 2, the negative terminal sheet 123 includes a negative current collector 1231 and a negative active material layer coated on the negative current collector 1231. A second coated region 1232 coated with the negative active material layer and a second uncoated region 1233 without the negative active material layer are formed on the negative current collector 1231. The second coated region 1232 and the second uncoated region 1233 are arranged in the axial direction of the housing 110. The second uncoated region 1233 extends beyond the separator 122 towards the other end in the height direction of the secondary battery 100 and is folded towards the axis of the housing 110 to form a stacked negative tab 124.

Referring to FIG. 1 to FIG. 2, the separator 122 is arranged between the positive terminal sheet 121 and the negative terminal sheet 123 to isolate the positive active material layer from the negative active material layer. Taking a lithium-ion secondary battery 100 as an example, a material of the positive current collector 1211 may be aluminum, and the positive active material layer includes a positive active material, which may be lithium cobalt oxide, lithium iron phosphate, ternary lithium, or lithium manganese oxide, etc. A material of the negative current collector 1231 may be copper, and the negative active material layer includes a negative active material, which may be carbon or silicon, etc. A base material of the separator 122 may be polypropylene (abbreviated as PP) or polyethylene (abbreviated as PE), etc. In order to protect and insulate a cell, the cell may also be covered with an insulating film, and the insulating film may be made of, for example, PP, PE, polyethylene terephthalate (abbreviated as PET), polyvinyl chloride (abbreviated as PVC), or other polymer materials.

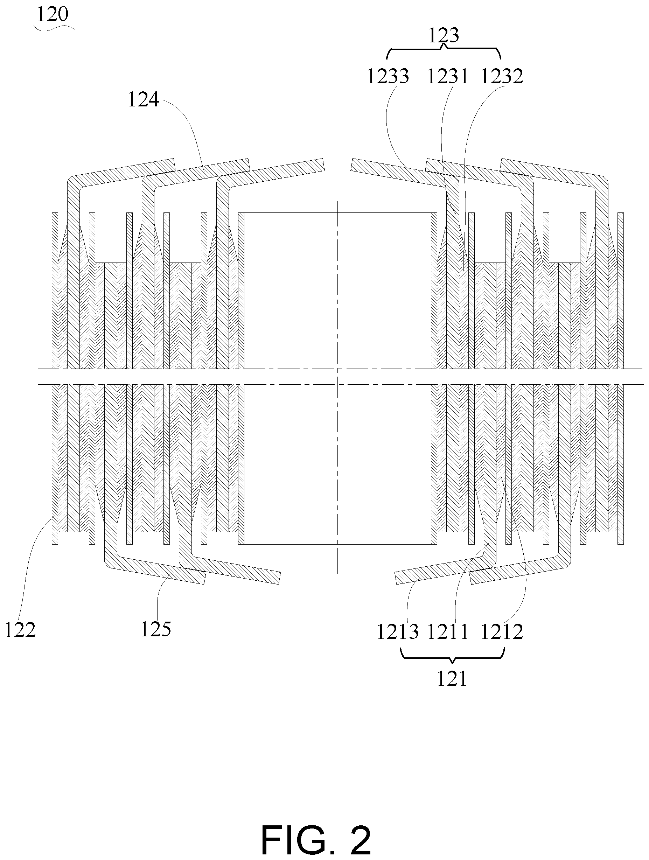

With reference to FIG.1 and FIG.2, further, in the disclosure, the positive tab 125 faces the end wall 111 or the opening 113, while the negative tab 124 faces the other end of the housing 110. In this embodiment, the positive tab 125 faces the end wall 111 and is electrically connected to the terminal post 140, making the terminal post 140 positively charged. The negative tab 124 faces the opening 113 and is electrically connected to the housing 110, making the housing 110 negatively charged. However, in other embodiments, the negative tab 124 may be connected to the terminal post 140, and the positive tab 125 may be connected to the housing 110.

Referring to FIG. 1, the cover plate 130 seals and mounted on the opening 113. An outer edge shape of the cover plate 130 corresponds to a shape of the opening 113 and is connected to the side wall 112 to seal the opening 113. In a specific embodiment, a rolling groove 114 that is concave toward the inner portion of the housing 110 is rolled on a region near an outer end of the side wall 112 of the housing 110. The rolling groove 114 includes a first side wall 1141 and a second side wall 1142. The first side wall 1141 is close to the electrode assembly 120 and may limit the displacement of the electrode assembly 120 in the axial direction, and one side of the second side wall 1142 away from the rolling groove 114 surrounds the housing 110 to form an annular step. The cover plate 130 is placed on the step. A sealing ring is arranged between the cover plate 130 and an annular groove 1121. An edge of the opening 113 is sealed by upsetting, so that the cover plate 130 presses tightly against the sealing ring, and a reliable connection is thus formed.

Referring to FIG. 1 to FIG. 2, the terminal post 140 is fixed to the end wall 111 and is electrically connected to the electrode assembly 120. Specifically, the end wall 111 is provided with a terminal post hole, and the terminal post 140 passes through and is mounted in the terminal post hole and is insulated from the end wall 111. One end of the terminal post 140 facing the electrode assembly 120 passes through the end wall 111 and is electrically connected to the positive tab 125 directly or indirectly. A structural form of the terminal post 140 may be any suitable form that can pass through the end wall 111 and be electrically connected to the positive tab 125 of the electrode assembly 120. For instance, a cross section of the terminal post 140 may be circular, square, prismatic, or an irregular profile that can achieve stable conduction. A shape of the terminal post hole corresponds to that of the terminal post 140. In this embodiment, the cross section of the terminal post 140 is circular.

Referring to FIG. 1, the current-collecting member 150 is arranged between the electrode assembly 120 and the cover plate 130, and the housing 110 and the electrode assembly 120 are electrically connected through the current-collecting member 150. To be specific, the current-collecting member 150 includes a current collector 151 and a housing-connecting portion 152 connected to an outer periphery of the current collector 151. The housing-connecting portion 152 may be an integral annular structure, or may be one or more fan-shaped annular structures, as long as it meets the current guiding requirements and welding strength requirements between the current-collecting member 150 and the housing 110. Before the rolling groove 114 is rolled on the housing 110, the housing-connecting portion 152 is first welded to the side wall 112 of the housing 110. During the rolling of the rolling groove 114, the housing-connecting portion 152 that is welded and connected to the housing 110 continues to be bent toward the axis of the housing 110, and a structure that is bent toward the axis of the housing 110 and welded to the surface of the rolling groove 114 facing the electrode assembly 120 is eventually formed.

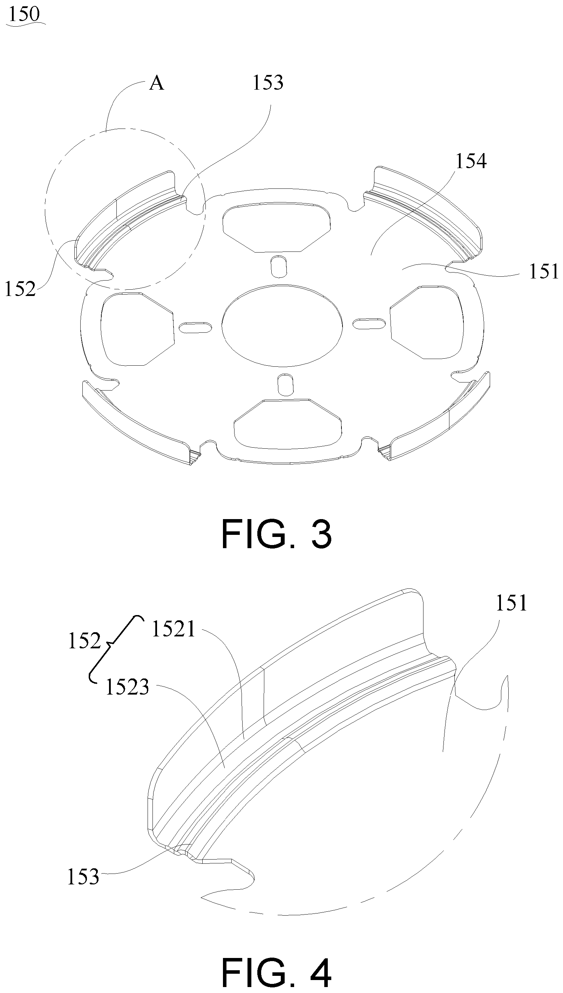

Referring to FIG. 3, FIG. 7, FIG. 9, FIG. 11, FIG. 15, and FIG. 17, the current collector 151 is fixedly connected to the tab. There are multiple ways to connect the current collector 151 and the tab, for example, it may be through welding connection or conductive adhesive bonding connection and other methods. As long as electrical connection between the current-collecting member 150 and the tab can be achieved to meet the current guiding requirements. In this embodiment, a welding connection method is adopted. Further, a portion where the current collector 151 is welded to the tab is a tab-connecting portion 154. A shape and a position of the tab-connecting portion 154 are not limited. Preferably, in this embodiment, four tab-connecting portions 154 are provided on the current collector 151 for welding connection with the tab, and the four tab-connecting portions 154 are evenly arranged in a circumferential direction of current collector 151. With this arrangement, the welding between the current-collecting member 150 and the tab is balanced and stable, and a uniform current guiding effect is provided, so that the stability of current guiding between the housing 110 and the electrode assembly 120 is improved.

Considering that when the housing-connecting portion 152 is bent toward the axis of the housing 110, bending stress is generated and the bending stress is further transferred to an inner portion of the current-collecting member 150, thereby causing the technical problem of warping in the inner portion of the current-collecting member 150, referring to FIG. 3 to FIG. 18, the current-collecting member 150 further includes a buffering portion 153 connecting the housing-connecting portion 152 and the current collector 151. The buffering portion 153 may have various forms, for example, it may be an elastic structure, an elastic material, etc. that can be easily deformed, so as to absorb the bending stress when the housing-connecting portion 152 is bent, which is not limited herein. The buffering portion 153 may weaken the transferring of the bending stress from the housing-connecting portion 152 to the fixed connection between the current collector 151 and the tab, so the problem of welding failure between the current-collecting member 150 and the tab caused by the bending stress is improved.

Referring to FIG. 3 to FIG. 18, in the secondary battery 100 provided by an embodiment of the disclosure, the buffering portion 153 includes an arch-shaped protrusion that protrudes from the current collector 151 and extends in a circumferential direction of the outer periphery of the current collector 151. The buffering portion 153 is formed with an indentation on the opposite side of the arch-shaped protrusion. When the housing-connecting portion 152 is bent and the bending stress is generated and transferred to the current collector 151, the buffering portion 153 is deformed to be straightened under the action of the bending stress. Part of the bending stress may be absorbed, and the transferring of the bending stress from the housing-connecting portion 152 to the fixed connection between the current collector 151 and the tab is weakened, so the problem of welding failure between the current-collecting member 150 and the tab caused by the bending stress is improved. A direction of the arch-shaped protrusion is not limited, and the arch-shaped protrusion may protrude in the direction toward the cover plate 130 or may protrude in the direction toward the electrode assembly 120. Preferably, in this embodiment, the arch-shaped protrusion protrudes in the direction toward the cover plate 130, and with this arrangement, the space of the housing 110 in the axial direction is not occupied, so energy density is increased due to the larger accommodating space of the housing 110.

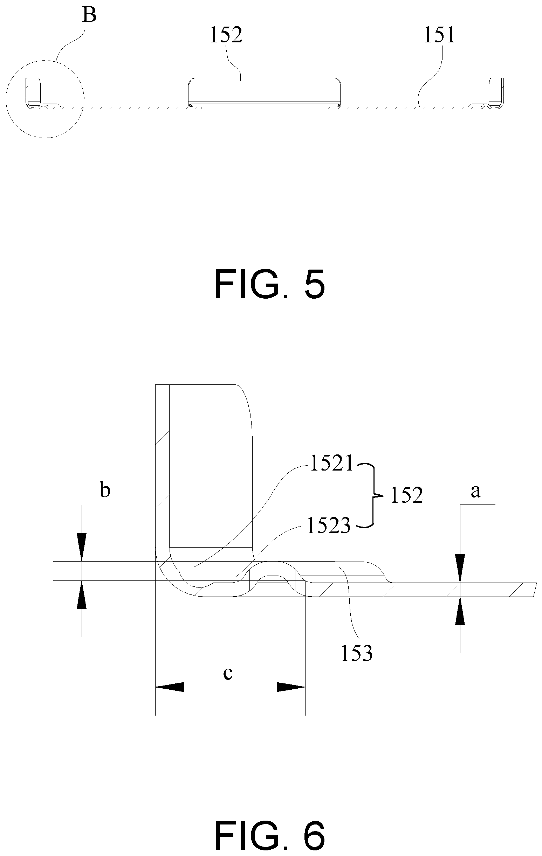

Referring to FIG. 3 and FIG. 6, in the secondary battery 100 provided by an embodiment of the disclosure, a thickness of the current collector 151 is a, and a height of the buffering portion 153 protruding from the current collector 151 is b, where 0.5a≤b≤3a. For example, b may be 0.5a, 0.75a, a, 1.25a, 1.5a, 1.75a, 2a, 2.5a, or 3a, etc. The height of the buffering portion 153 protruding from the current collector 151 is set to be greater than or equal to 0.5a to ensure that the buffering portion 153 has a space for deformation, and is set to be less than or equal to 3a to avoid the buffering portion 153 interfering with the bending of the housing-connecting portion 152 due to excessive height. Material saving can also be achieved in this way.

Referring to FIG. 3 and FIG. 6, in the secondary battery 100 provided by an embodiment of the disclosure, in a radial direction of the current-collecting member 150, a distance from an inner side of the arch-shaped protrusion to an outer periphery of the current-collecting member 150 is c, where b≤c≤4mm. Setting b to be less than or equal to c can ensure that there is a sufficient space between the housing-connecting portion 152 and the current collector 151 to accommodate the buffering portion 153. The distance c from the inner side of the arch-shaped protrusion to the outer periphery of the current-collecting member 150 is set to be less than or equal to 4mm, such as 4mm, 3.5mm, 3mm, 2.5mm, 2mm, 1.5mm or 1mm, etc., as long as it is less than b. The value of b may be adaptively adjusted according to actual conditions. With this arrangement, the distance between the buffering portion 153 and the housing-connecting portion 152 is closer, so that the bending stress is absorbed, and the transferring of the bending stress from the housing-connecting portion 152 to the fixed connection between the current collector 151 and the tab is weakened.

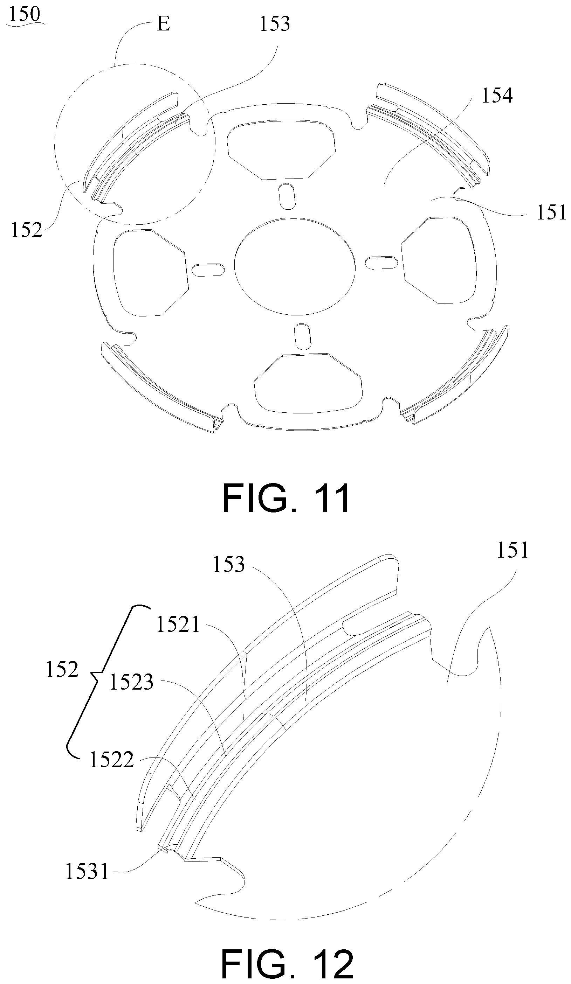

Referring to FIG. 11 to FIG. 18, in the secondary battery 100 provided by an embodiment of the disclosure, the buffering portion 153 is provided with a first weakened portion 1531 thereon extending in a circumferential direction of the current-collecting member 150. The form of the first weakened portion 1531 may have various types, for example, it may be one or a combination of thinning, notching, or hollowing, as long as the strength of the buffering portion 153 can be reduced and the deformation of the buffering portion 153 can be easily implemented, so that the transferring of the bending stress from the housing-connecting portion 152 to the fixed connection between the current collector 151 and the tab may be weakened.

Referring to FIG. 3 to FIG. 18, in the secondary battery 100 provided by an embodiment of the disclosure, the current-collecting member 150 includes a plurality of housing-connecting portions 152 and a plurality of buffering portions 153 connected to the housing-connecting portions 152 one-to-one, and the buffering portions 153 surround and are connected to the outer periphery of the current collector 151. With this arrangement, structural strength is improved, a contact area is increased, heat dissipation performance is enhanced, resistance effect is lowered, less materials are used, and stress concentration is decreased. Further, to facilitate the positioning and connection between the housing-connecting portion 152 and the current-collecting member 150, in this embodiment, the plural housing-connecting portions 152 have the same shape and are arranged in an array in the circumferential direction of the current collector 151. With this arrangement, a more uniform current guiding effect may be generated in the circumferential direction between the current-collecting member 150 and the side wall 112, so that the stability of current guiding between the housing 110 and the electrode assembly 120 is improved. Further, each housing-connecting portion 152 is connected one-to-one to one buffering portion 153, and each buffering portion 153 may provide the effect of absorbing the bending stress for the corresponding housing-connecting portion 152. In this way, the uniformity and balance of the force applied on the current-collecting member 150 is improved, and the current guiding stability of the current-collecting member 150 is enhanced.

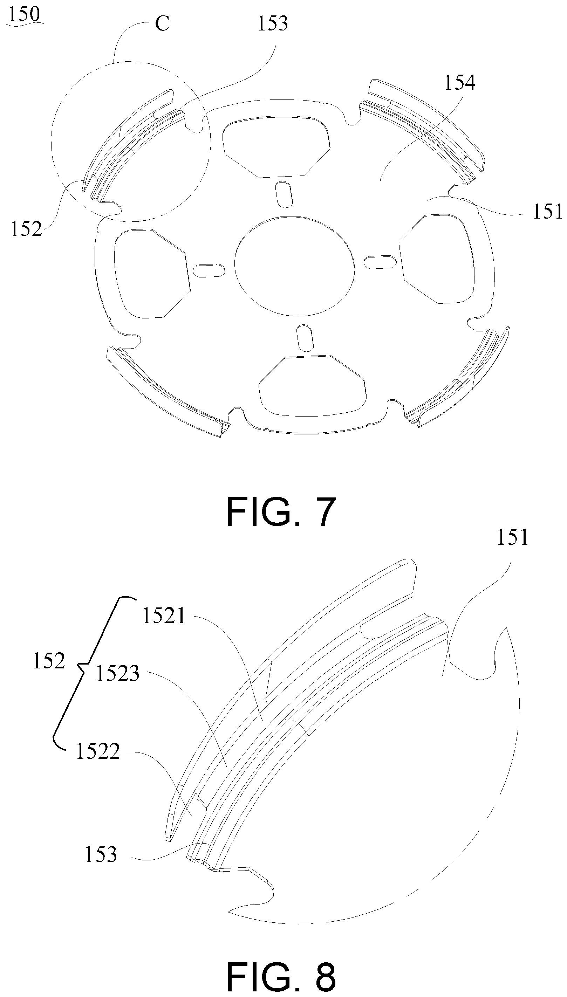

Referring to FIG. 7 to FIG. 18, in the secondary battery 100 provided by an embodiment of the disclosure, each housing-connecting portion 152 includes a bending portion 1521 connected to the buffering portion 153, and notches 1522 are arranged on both sides of the bending portion 1521 and/or the buffering portion 153 in a circumferential direction of the housing 110. This arrangement includes arrangement of openings 113 only on both sides of the bending portion 1521, arrangement of the notches 1522 only at both ends of the buffering portion 153, or arrangement of the notches 1522 at both ends of both the bending portion 1521 and the buffering portion 153. With the arrangement of the notches 1522, the width of bending portion 1521 and/or buffering portion 153 may be decreased, so that the strength of the bending portion 1521 and/or the buffering portion 153 is reduced, deformation is easily achieved, and the bending stress is thus absorbed. In addition, the notches 1522 of the bending portion 1521 may reduce the bending stress generated when the housing-connecting portion 152 is bent. The combination of the above effects may weaken the transferring of the bending stress towards the welding and connecting position between the current-collecting member 150 and the tab, and the problem of welding failure between the current-collecting member 150 and the tab caused by the bending stress is thus improved.

Referring to FIG. 3 to FIG. 18, in the secondary battery 100 provided by an embodiment of the disclosure, a sum of minimum current flow areas of all the bending portions 1521 is s1, a sum of minimum current flow areas of all the buffering portions 153 is s2, and a total area of a welding wire formed by welding the current collector 151 and the tab is s, where s1>s and s2>s. It should be noted that the minimum current flow area of the bending portion 1521 is the minimum cross-sectional area of each bending portion 1521 in the circumferential direction of the current-collecting member 150. The minimum current flow area of the buffering portion 153 is the minimum cross-sectional area of each buffering portion 153 in the circumferential direction of the current-collecting member 150. The total area of the welding wire refers to the area of the projection of all welding imprints formed by welding the current collector 151 and the tab in the axial direction of the electrode assembly 120. The arrangement where the sum s1 of the minimum current flow areas of all the bending portions 1521 and the sum s2 of the minimum current flow areas of all the buffering portions 153 are both greater than the total area s of the welding wire may weaken the transferring of the bending stress without affecting the current flowing effect of the bending portion 1521 and the buffering portion 153.

Referring to FIG. 3 to FIG. 18, in the secondary battery 100 provided by an embodiment of the disclosure, each housing-connecting portion 152 includes a bending portion 1521 connected to the buffering portion 153, and the bending portion 1521 is provided with a second weakened portion 1523 thereon extending in the circumferential direction of the current-collecting member 150. The form of the second weakened portion 1523 may have various types, for example, it may be one or a combination of thinning, notching, or hollowing, as long as the strength of the bending portion 1521 can be reduced and the deformation of the bending portion 1521 can be easily implemented. Arrangement of the second weakened portion 1523 on the bending portion 1521 may weaken the stress generated when the housing-connecting portion 152 is bent. Further, due to the reduced strength of the second weakened portion 1523, under the action of stress, the second weakened portion 1523 of the bending portion 1521 is deformed first. As such, the transferring of the stress towards the welding and connecting position between the current-collecting member 150 and the tab is reduced, and the problem of welding failure between the current-collecting member 150 and the tab caused by the bending stress is thus improved. Meanwhile, the second weakened portion 1523 may also guide and position the bending of the bending portion 1521, so that the precision of the bending position of the bending portion 1521 is improved, and the consistency of the assembly quality of the battery 100 is thereby enhanced. In addition, when welding the housing-connecting portion 152 and the housing 110 before the rolling groove 114, the second weakened portion 1523 may also serve as a reference line for the welding position, so as to facilitate the positioning of the welding head during welding.

Referring to FIG. 3 to FIG. 18, in the secondary battery 100 provided by an embodiment of the disclosure, a sum of minimum current flow areas of the second weakened portions 1523 is s3, and a total area of a welding wire formed by welding the current collector 151 and the tab is s, where s3>s. It should be noted that the minimum current flow area of the second weakened portion 1523 is the minimum cross-sectional area of each second weakened portion 1521 in the circumferential direction of the current-collecting member 150. The arrangement where the sum s3 of the minimum current flow areas of all the second weakened portions 1523 is greater than the total area s of the welding wire may weaken the transferring of the bending stress without affecting the current flowing effect of the second weakened portions 1523.

In the secondary battery 100 provided by a first embodiment of the disclosure, referring to FIG. 3 to FIG. 6, the outer periphery of the current collector 151 is surrounded by four housing-connecting portions 152, and one buffering portion 153 is arranged between each housing-connecting portion 152 and the current collector 151. The buffering portion 153 is an arch-shaped protrusion projecting in the direction toward the cover plate 130. The thickness a of the current collector 151 is 0.2mm, the height b of the buffering portion 153 protruding from the current collector 151 is 0.4mm, and the distance c from the inner side of the arch-shaped protrusion to the outer periphery of the current-collecting member 150 is 3.5mm. The second weakened portion 1523 that reduces the strength of the bending portion 1521 is arranged on the bending portion 1521, and the second weakened portion 1523 adopts a thinning structure. The arrangement of this thinning structure weakens the stress generated when the housing-connecting portion 152 is bent, and at the same time weakens the strength of the bending portion 1521. Under the action of stress, the second weakened portion 1523 of the bending portion 1521 is deformed first, so that the transferring of the stress towards the welding and connecting position between the current-collecting member 150 and the tab is reduced, and the problem of welding failure between the current-collecting member 150 and the tab caused by the bending stress is thus improved.

In the secondary battery 100 provided by a second embodiment of the disclosure, referring to FIG. 7 to FIG. 8, different from the first embodiment, the notches 1522 that reduce the strength of the bending portion 1521 are arranged at both ends of the bending portion 1521. The arrangement of the notches 1522 may reduce the width of the bending portion 1521 and may further reduce the strength of the bending portion 1521, so that the bending portion 1521 may be easily deformed, and the bending stress may thus be absorbed. In addition, the notches 1522 of the bending portion 1521 may reduce the bending stress generated when the housing-connecting portion 152 is bent. The combination of the above effects may weaken the transferring of the bending stress towards the welding and connecting position between the current-collecting member 150 and the tab, and the problem of welding failure between the current-collecting member 150 and the tab caused by the bending stress is thus improved.

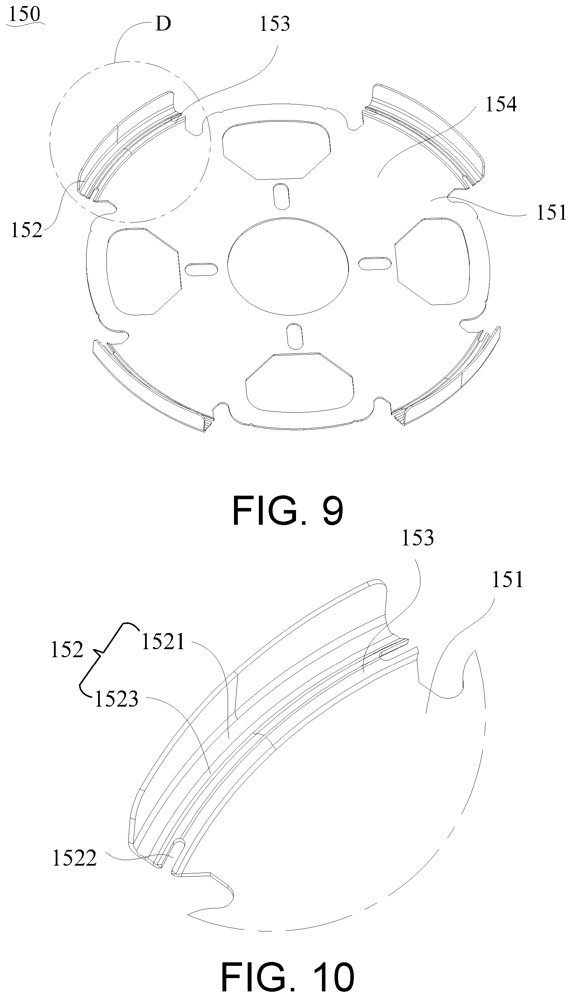

In the secondary battery 100 provided by a third embodiment of the disclosure, referring to FIG. 9 to FIG. 10, different from the first embodiment, the notches 1522 that reduce the strength of the buffering portion 153 are arranged at both ends of the buffering portion 153. The arrangement of the notches 1522 may reduce the width of the buffering portion 153 and thus reduce the strength of the buffering portion 153, so that the buffering portion 1521 may be easily deformed, and the bending stress may thus be absorbed. As such, the transferring of the stress towards the welding and connecting position between the current-collecting member 150 and the tab is weakened, and the problem of welding failure between the current-collecting member 150 and the tab caused by the bending stress is thus improved.

In the secondary battery 100 provided by a fourth embodiment of the disclosure, referring to FIG. 11 to FIG. 14, different from the second embodiment, the first weakened portion 1531 is arranged on the buffering portion 153. The form of the first weakened portion 1531 is a thinning structure, and this thinning structure may weaken the strength of the buffering portion 153. As such, the buffering portion 153 may be easily deformed, so the transferring of the bending stress from the housing-connecting portion 152 to the fixed connection between the current collector 151 and the tab is further weakened.

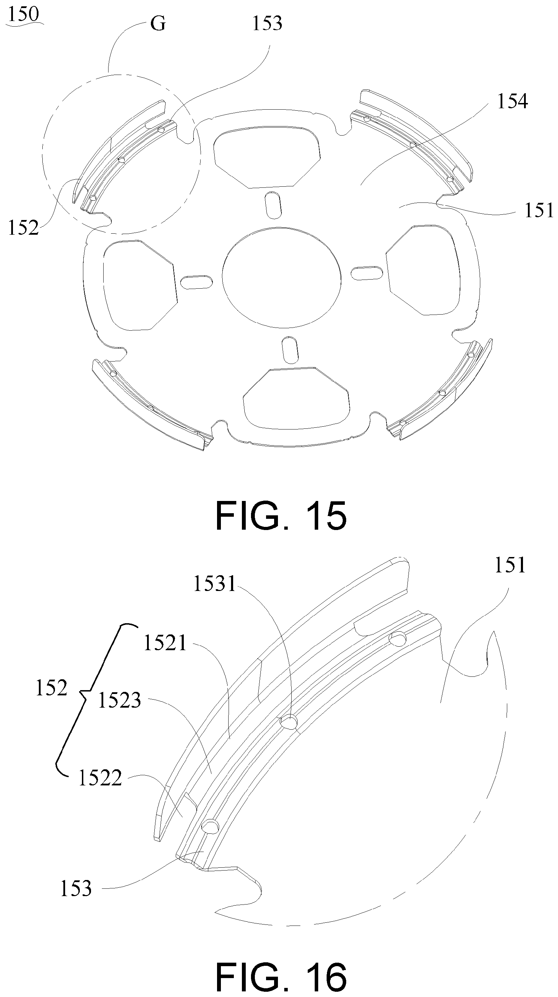

In the secondary battery 100 provided by a fifth embodiment of the disclosure, referring to FIG. 15 to FIG. 16, the outer periphery of the current collector 151 is surrounded by four housing-connecting portions 152, and one buffering portion 153 is arranged between each housing-connecting portion 152 and the current collector 151. The buffering portion 153 is an arch-shaped protrusion projecting in the direction toward the cover plate 130. The thickness a of the current collector 151 is 0.2mm, the height b of the buffering portion 153 protruding from the current collector 151 is 0.4mm, and the distance c from the inner side of the arch-shaped protrusion to the outer periphery of the current-collecting member 150 is 3.5mm. The first weakened portion 1531 is arranged on the buffering portion 153. The form of the first weakened portion 1531 is a hollow structure, that is, a plurality of through holes are arranged in the circumferential direction of the buffering portion 153. The shape of the through holes may be circular holes, elongated circular holes, or waist-shaped holes, etc., which is not limited herein. In this embodiment, the through holes are in the shape of circular holes. Further, the notches 1522 that reduce the strength of the bending portion 1521 are arranged at both ends of the bending portion 1521, and the second weakened portion 1523 that may further reduce the strength of the bending portion 1521 is also arranged. The second weakened portion 1523 adopts a thinning structure. The combined effect of the first weakened portion 1531, the second weakened portion 1523, and the notches 1522 may achieve an improved effect of weakening the transferring of the bending stress towards the welding and connecting position between the current-collecting member 150 and the tab, and the problem of welding failure between the current-collecting member 150 and the tab caused by the bending stress is thus improved.

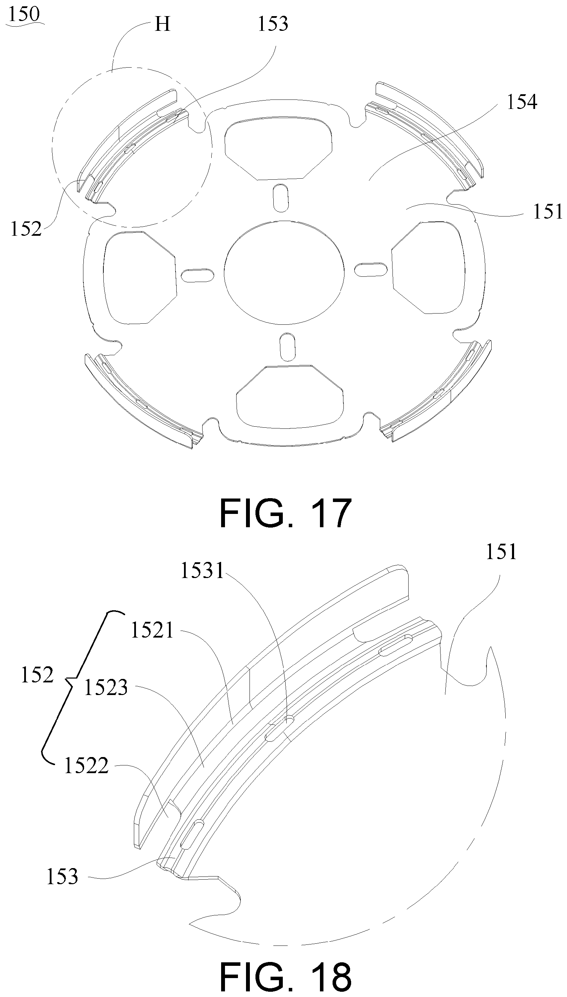

In the secondary battery 100 provided by a sixth embodiment of the disclosure, referring to FIG. 17 to FIG. 18, the through holes are in the shape of waist-shaped holes. These waist-shaped holes form a larger hollow region in the buffering portion 153, so an improved effect of weakening the strength of the buffering portion 153 is provided.

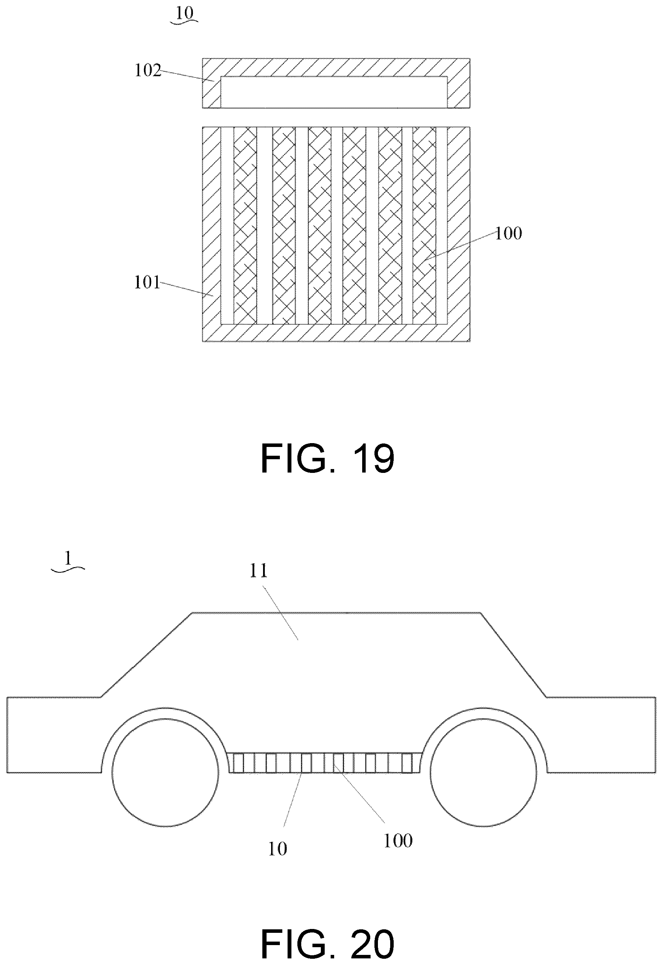

Referring to FIG. 20, the disclosure further provides an electronic device 1 including a battery group 10. The battery group 10 includes the secondary battery 100 according to any one of the above. In the battery group 10 provided by an embodiment of the disclosure, referring to FIG. 19, the battery group 100 includes a box 101, a box cover 102, and a plurality of secondary batteries 100. The plurality of secondary batteries 100 are placed in the box 101 and are connected in series, in parallel, or in a mixed manner of series and parallel. The box cover 102 covers the box 101 to protect the secondary batteries 100. It should be noted that in addition to the secondary battery 100 provided by the disclosure, the battery group 10 may also include a thermal management system of the battery group 10, a circuit board, and other parts. The battery group 10 may be a battery module, a battery pack, an energy storage cabinet, etc., and description thereof is not provided herein.

The electronic device 1 further includes a working portion electrically connected to the battery group 10 to obtain power support. As an embodiment, the electronic device 1 is a vehicle. The vehicle may be a fuel vehicle, a gas vehicle, or a new energy vehicle, and the new energy vehicle may be a pure electric vehicle, a hybrid vehicle, or a range-extended vehicle, etc., which is not limited herein. The working portion 11 is a vehicle body, and the battery group 10 is arranged at the bottom of the vehicle body and provides electrical energy support for the driving of the vehicle or the operation of electrical components in the vehicle. However, in other embodiments, the electronic device 1 may be a mobile phone, a portable apparatus, a notebook computer, a ship, a spacecraft, an electric toy, an electric tool, etc. The spacecraft includes but not limited to an airplane, a rocket, a space shuttle, a spaceship, etc. The working portion 11 may be a unit component capable of obtaining the electric energy of the battery group 10 and performing corresponding work, such as a blade rotating unit of a fan, a dust collection working unit of a vacuum cleaner, etc. The electric toy includes but not limited to a stationary or mobile electric toy, for example, a game machine, an electric car toy, an electric boat toy, an electric airplane toy, etc. The electric tool includes a metal cutting electric tool, a grinding electric tool, an assembling electric tool, and an electric tool for railway use, such as an electric drill, an electric grinder, an electric wrench, an electric screwdriver, an electric hammer, an impact drill, a concrete vibrator, an electric planer, etc. The above electronic device 1 is not particularly limited in the embodiments of the disclosure.

In the secondary battery provided by the disclosure, the buffering portion is arranged between the housing-connecting portion and the current collector. The buffering portion may absorb the bending stress generated when the housing-connecting portion is bent. In this way, the transferring of the bending stress from the housing-connecting portion to the fixed connection between the current collector and the tab is weakened, so the problem of welding failure between the current-collecting member and the tab caused by the bending stress is improved. Therefore, some practical problems in the related art are effectively overcome, so that the disclosure exhibits high utilization value and use significance.

## Claims

1. A secondary battery (100), comprising:
a housing (110) comprising a surrounding side wall (112), wherein one end of the side wall (112) is formed with an opening (113), and one end of the side wall (112) close to the opening (113) comprises a rolling groove (114) recessed toward an inner portion of the housing (110);
an electrode assembly (120) accommodated in the housing (110) and comprising a tab (125) facing the opening (113);
a cover plate (130) sealing and mounted on the opening (113); and
a current-collecting member (150) comprising a current collector (151) and a housing-connecting portion (152) arranged at an outer periphery of the current collector (151), wherein the current collector (151) is fixedly connected to the tab (125), and the housing-connecting portion (152) is bent toward an axis of the housing (110) and is welded to a surface of the rolling groove (114) facing the terminal assembly (120),
wherein the current-collecting member (150) further comprises a buffering portion connecting the housing-connecting portion (152) and the current collector (151), and the buffering portion is configured to absorb bending stress when the housing-connecting portion (152) is bent.

2. The secondary battery (100) according to claim 1, wherein the buffering portion (153) comprises an arch-shaped protrusion protruding from the current collector (151) and extending in a circumferential direction of the outer periphery of the current collector (151), and the buffering portion (153) is formed with an indentation on the opposite side of the arch-shaped protrusion.

3. The secondary battery (100) according to claim 1 or 2, wherein a thickness of the current collector (151) is a, and a height of the buffering portion (153) protruding from the current collector (151) is b, where 0.5a≤b≤3a.

4. The secondary battery (100) according to any one of claims 1 to 3, wherein in a radial direction of the current-collecting member (150), a distance from an inner side of the arch-shaped protrusion to an outer periphery of the current-collecting member (150) is c, where b≤c≤4mm.

5. The secondary battery (100) according to any one of claims 1 to 4, wherein the buffering portion (153) is provided with a first weakened portion (1531) thereon extending in a circumferential direction of the current-collecting member (150), and the first weakened portion (1531) is configured to weaken the strength of the buffering portion (153).

6. The secondary battery (100) according to any one of claims 1 to 5, wherein the current-collecting member (150) comprises a plurality of housing-connecting portions (152) and a plurality of buffering portions (153) connected to the housing-connecting portions (152) one-to-one, the buffering portions (153) surround and are connected to the outer periphery of the current collector (151), each housing-connecting portion (152) comprises a bending portion (1521) connected to the buffering portion (153), and notches (1522) are arranged on both sides of the bending portion (1521).

7. The secondary battery (100) according to any one of claims 1 to 6, wherein a sum of minimum current flow areas of all the bending portions (1521) is s1, a sum of minimum current flow areas of all the buffering portions (153) is s2, and a total area of a welding wire formed by welding the current collector (151) and the tab is s, where s1>s and s2>s.

8. The secondary battery (100) according to any one of claims 1 to 7, wherein each housing-connecting portion (152) comprises a bending portion (1521) connected to the buffering portion (153), the bending portion (1521) is provided with a second weakened portion (1523) thereon extending in the circumferential direction of the current-collecting member (150), and the second weakened portion (1523) is configured to weaken the strength of the bending portion (1521).

9. The secondary battery (100) according to any one of claims 1 to 8, wherein a sum of minimum current flow areas of all the second weakened portions (1523) is s3, and a total area of a welding wire formed by welding the current collector (151) and the tab is s, where s3>s.

10. The secondary battery (100) according to any one of claims 1 to 9, wherein the current-collecting member (150) comprises a plurality of housing-connecting portions (152) and a plurality of buffering portions (153) connected to the housing-connecting portions (152) one-to-one, the buffering portions (153) surround and are connected to the outer periphery of the current collector (151), each housing-connecting portion (152) comprises a bending portion (1521) connected to the buffering portion (153), and the buffering portion (153) in a circumferential direction of the housing (110).

11. A battery pack, comprising the secondary battery (100) according to any one of claims 1 to 10.

12. An electronic device (1), comprising a battery group (10) comprising the secondary battery (100) according to any one of claims 1 to 10.
